(19) **Europäisches Patentamt**
**European Patent Office**
**Office européen des brevets**

(11) **EP 4 422 899 B1**

(12) **FASCICULE DE BREVET EUROPEEN**

(45) Date de publication et mention
de la délivrance du brevet:
**01.07.2026 Bulletin 2026/27**

(21) Numéro de dépôt: **22809796.0**

(22) Date de dépôt: **28.10.2022**

(51) Classification Internationale des Brevets (IPC):
**B60K 6/387** (2007.10)    **B60K 6/442** (2007.10)
**B60K 6/52** (2007.10)    **B60K 1/00** (2006.01)
**B60K 1/02** (2006.01)    **B60W 10/02** (2006.01)
**B60W 10/06** (2006.01)    **B60W 10/08** (2006.01)
**B60W 10/26** (2006.01)    **B60W 20/11** (2016.01)
**B60W 20/14** (2016.01)    **B60W 20/20** (2016.01)
**B60W 20/40** (2016.01)    **B60W 30/184** (2012.01)
**B60K 6/448** (2007.10)

(52) Classification Coopérative des Brevets (CPC):
**B60K 6/387; B60K 1/02; B60K 6/442; B60K 6/448;**
**B60K 6/52; B60K 17/02; B60K 17/354;**
**B60K 17/356; B60L 50/15; B60W 10/02;**
**B60W 10/06; B60W 10/08; B60W 10/26;**
**B60W 20/11; B60W 20/14;**                (Cont.)

(86) Numéro de dépôt international:
**PCT/EP2022/080178**

(87) Numéro de publication internationale:
**WO 2023/073162 (04.05.2023 Gazette 2023/18)**

(54) **PROCEDE ET SYSTEME DE COMMANDE DES MACHINES ELECTRIQUES D'UN VEHICULE HYBRIDE A QUATRE ROUES MOTRICES**

VERFAHREN UND SYSTEM ZUR STEUERUNG ELEKTRISCHER MASCHINEN EINES HYBRIDFAHRZEUGS MIT VIER ANTRIEBSRÄDERN

METHOD AND SYSTEM FOR CONTROLLING ELECTRIC MACHINES OF A HYBRID VEHICLE WITH FOUR DRIVE WHEELS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **29.10.2021 FR 2111521**

(43) Date de publication de la demande:
**04.09.2024 Bulletin 2024/36**

(73) Titulaire: **Ampere SAS**
**92100 Boulogne-Billancourt (FR)**

(72) Inventeurs:
• **MERIENNE, Ludovic**
**78084 Guyancourt Cedex (FR)**
• **PEREZ-CHUECOS, Martin**
**78084 Guyancourt Cedex (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**US-A1- 2017 334 281    US-A1- 2020 384 978**

(52) Classification Coopérative des Brevets (CPC):
(Cont.)**B60W 20/20; B60W 20/40; B60W 30/1843; B60W 50/0097;** B60W 2510/00; B60W 2510/085; B60W 2510/244; B60W 2510/246; B60W 2540/10; B60W 2540/12; B60W 2710/021; B60W 2710/0677; B60W 2710/083; B60Y 2200/92; B60Y 2400/302; B60Y 2400/307

**Description**

La présente invention concerne le domaine des véhicules hybrides, notamment à quatre roues motrices. Elle concerne plus particulièrement un procédé et un système de commande des machines électriques d'un véhicule hybride à quatre roues motrices du type comprenant un moteur thermique et au moins trois machines électriques alimentées par une batterie de traction. En général, la batterie de traction est positionnée au centre du véhicule, une machine électrique est reliée au train arrière et deux machines électriques sont reliées au train avant, comme le moteur thermique. . Le fait d'avoir des machines électriques sur les deux trains du véhicule permet d'améliorer les lois de contrôle châssis en optimisant la répartition de couple entre le train avant et le train arrière afin d'améliorer la motricité et l'agilité du véhicule en ligne droite et en virage. Néanmoins, il est fréquent que, en mode de décharge de la batterie de traction, la somme des capacités de consommation électrique des trois machines électriques excède la capacité de la batterie de traction à délivrer de l'énergie ce qui provoque des sous-tensions au niveau de la batterie de traction, A l'inverse, en mode régénération, la somme des capacités de production électrique des trois machines électriques excède souvent la capacité de régénération de la batterie de traction, ce qui provoque des surtensions au niveau de la batterie de traction. Des surtensions sur la batterie de traction dégradent fortement la durabilité de la batterie et, en cas de surtension prolongée, peuvent causer une explosion des cellules composant la batterie. Les sous-tensions sur la batterie de traction dégradent également fortement la durabilité de la batterie et, en cas de sous-tension prolongée ou à un niveau très faible de tension, peuvent amener la batterie à une décharge profonde et irréversible.

Il est donc souhaitable d'éviter ces situations afin de préserver la batterie de traction et de prolonger sa durée de vie.

A cet effet, un premier objet de l'invention concerne un procédé de commande des machines électriques d'un véhicule hybride à quatre roues motrices du type comprenant un moteur thermique et au moins trois machines électriques alimentées par une batterie de traction, comprenant :

- une étape de gestion de consignes de puissance électrique destinées aux dites machines électriques au cours de laquelle on détermine, pour chaque machine électrique, des bornes maximales de puissance électrique apte à être utilisée par ladite machine électrique,
- une étape de distribution de couple au cours de laquelle on distribue à chaque machine une consigne de couple,

et dans lequel :

- au cours de l'étape de gestion, on détermine lesdites bornes maximales de chaque machine électrique en prenant en compte les limitations suivantes :

    (i) la puissance électrique maximale disponible au niveau de la batterie de traction,
    (ii) une consigne de puissance électrique cible déterminée en fonction de la position d'au moins un organe de commande du véhicule,
    (iii) une consigne de puissance maximale intrinsèque de la machine électrique,
    (iv) une valeur en cours de la puissance électrique fournie par la machine électrique, et

- au cours de l'étape de distribution, on distribue à chaque machine électrique une consigne de couple établie en limitant un couple de consigne cible avec des minima et maxima obtenus par conversion en couples mécaniques des bornes maximales de puissance électrique déterminées au cours de l'étape de gestion.

Ainsi, la consigne de couple distribuée à chaque machine électrique ne peut dépasser les limitations intrinsèques de la machine électrique considérée et l'ensemble des consignes de couple distribuées ne peuvent dépasser la capacité de la batterie. Il est ainsi impossible de dépasser les capacités de la batterie de traction, en charge ou en décharge, ce qui permet de préserver ses performances.

Les étapes du procédé de commande peuvent être mises en œuvre à chaque détermination de la consigne de puissance électrique cible, autrement dit à chaque changement de position dudit au moins un organe de commande du véhicule ou à des intervalles de temps prédéterminés. Dit autrement, les étapes du procédé de commande selon l'invention sont typiquement mises en œuvre à un instant t et réitérées à chaque détermination de la consigne de puissance électrique cible ou à des intervalles de temps prédéterminés.

**Au** cours de l'étape de gestion, notamment lorsqu'au moins une machine électrique travaille en mode moteur, on détermine lesdites bornes maximales en prenant également en compte comme limitation une puissance électrique disponible au niveau de la batterie de traction provenant d'une puissance électrique à venir fournie par une machine électrique fonctionnant en mode générateur pondérée par un facteur d'anticipation de puissance disponible dépendant de la température de la batterie de traction dont la valeur est comprise dans un intervalle allant de 0 à 1. Lorsque des machines électriques travaillent en mode moteur, il peut arriver que la puissance électrique maximale disponible au niveau de la batterie de traction soit très faible (cas typique d'une batterie très froide). La prise en compte de cette limitation avec l'ajout d'un facteur d'anticipation de puissance disponible à l'apport à venir d'énergie par une machine électrique de charge permet d'éviter un blocage du système.

Avantageusement, au cours de l'étape de gestion, on pourra procéder de la manière suivante :

- on détermine d'abord une puissance électrique disponible au niveau d'un réseau formé par l'ensemble des machines électriques et de la batterie de traction,
- puis on détermine les bornes maximales de chaque machine électrique selon un ordre de priorité prédéterminé des machines électriques :

    la borne maximale de la première machine dans l'ordre de priorité étant égale au minimum entre (i) la puissance électrique disponible au niveau du réseau, (ii) la consigne de puissance maximale intrinsèque de la première machine électrique, (iii) la consigne de puissance électrique cible de la première machine,

    la borne maximale de la deuxième machine dans l'ordre de priorité étant égale au minimum entre (i) la somme de la puissance électrique maximale disponible au niveau de la batterie de traction et de la valeur en cours de la puissance électrique fournie par la troisième machine électrique, moins la valeur de borne maximale de puissance électrique déterminée pour la première machine et (ii) la consigne de puissance maximale intrinsèque de la deuxième machine électrique,

    la borne maximale de la troisième machine dans l'ordre de priorité étant égale au minimum entre (i) la puissance électrique maximale disponible au niveau de la batterie de traction moins les valeurs de borne maximale de puissance électrique déterminée pour les première et deuxième machines, et (ii) la consigne de puissance maximale intrinsèque de la troisième machine électrique.

Ceci revient à distribuer la puissance électrique disponible au niveau du réseau entre les différentes machines selon un ordre de priorité qui peut être différent selon que la batterie de traction fonctionne en mode charge ou en mode décharge.

En particulier, la puissance électrique disponible au niveau du réseau peut être déterminée comme étant :

- en mode de décharge de la batterie de traction, la somme de la puissance électrique maximale disponible au niveau de la batterie de traction et des puissances électriques maximales utilisées par les deuxième et troisième machines électriques fonctionnant en mode générateur,
- en mode de charge de la batterie de traction, la somme de la puissance électrique maximale disponible au niveau de la batterie de traction et des puissances électriques maximales utilisées par les deuxième et troisième machines électriques fonctionnant en mode moteur.

Dès lors, en mode de décharge de la batterie de traction, chaque puissance électrique maximale fournie par la deuxième et la troisième machine électrique peut alors être égale, pour chacune de ces machines, au maximum entre la valeur en cours de la puissance électrique fournie par la machine électrique considérée et la puissance électrique à venir fournie par la machine électrique considérée pondérée par le facteur d'anticipation de puissance disponible. Lorsque le véhicule hybride comprend une machine électrique arrière, reliée au train arrière du véhicule, une machine électrique principale avant et une machine électrique secondaire avant reliées au train avant, la machine électrique principale avant étant apte à être couplée mécaniquement temporairement indirectement au moteur thermique (par exemple via un ou plusieurs éléments tels qu'embrayage et boîte de vitesse), la machine électrique secondaire avant étant apte à être couplée mécaniquement directement au moteur thermique au moins temporairement (de préférence en permanence), on pourra choisir l'ordre de priorité décroissant suivant des machines électriques:

- en mode de décharge de la batterie de traction : machine électrique arrière, machine électrique principale avant, machine électrique secondaire avant,
- en mode de charge de la batterie de traction : machine électrique secondaire avant, machine électrique principale avant, machine électrique arrière.

En mode de décharge, ceci permet de privilégier la machine électrique arrière et par conséquent une accélération fournie par le train arrière, ce qui assure une stabilité en termes de dynamique véhicule. En mode de charge, on va privilégier une machine électrique qui est par exemple couplée en permanence au moteur thermique, par exemple la machine électrique secondaire avant, et qui est donc la plus efficace en termes de rendement mécanique pour être utilisée en mode générateur.

L'invention a également pour objet un système de commande des machines électriques d'un véhicule hybride à quatre roues motrices du type comprenant un moteur thermique et au moins trois machines électriques alimentées par une batterie de traction, notamment agencées tel que précédemment décrit, configuré pour mettre en œuvre le procédé de commande selon l'invention, le système de commande comprenant :

- une unité de gestion configurée pour mettre en œuvre l'étape de gestion du procédé de commande,
- une unité de distribution configurée pour mettre en œuvre l'étape de distribution du procédé de commande.

Enfin, l'invention a encore pour objet un véhicule hybride à quatre roues motrices du type comprenant un moteur thermique et au moins trois machines électriques alimentées par une batterie de traction, comprenant un système de commande selon l'invention. L'agencement des machines électriques pourra notamment être tel que décrit plus haut.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

La [Fig. 1] représente schématiquement une configuration de véhicule hybride à quatre roues motrices,
La [Fig. 2] représente schématiquement un mode de réalisation d'un système de commande configuré pour la mise en œuvre du procédé de commande selon un mode de réalisation de l'invention.

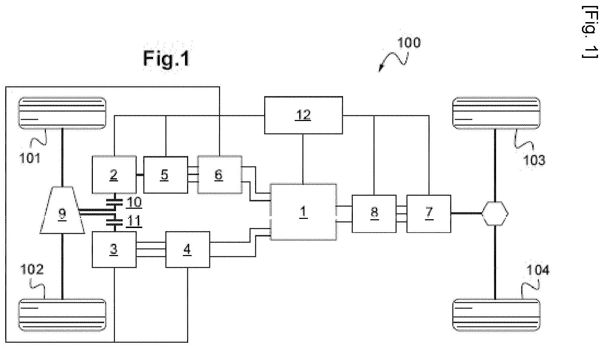

La figure 1 représente schématiquement un véhicule hybride 100 électrique comprenant quatre roues motrices, deux roues avant 101, 102, et deux roues arrière 103, 104. Le véhicule comprend une batterie de traction 1 et un moteur thermique 2, ainsi que trois machines électriques : une machine électrique principale avant 3, une machine électrique secondaire avant 5 et une machine électrique arrière 7. Chacune des machines électriques 3, 5, 7 est raccordée électriquement à la batterie de traction 1 et équipée d'un onduleur/démarreur 4, 6, 8 respectivement, permettant de transformer le courant continu de la batterie de traction 1 en courant alternatif et vice versa. La machine électrique secondaire avant 5 est également couplée mécaniquement directement au moteur thermique 2.

Un premier embrayage 10 connecte le moteur thermique 2 et la machine électrique secondaire avant 5 avec une boîte de vitesses 9. Un deuxième embrayage 11 connecte la machine principale avant 3 à la boîte de vitesses 9.

Dans le mode hybride, le moteur thermique 2 est découplé des roues du véhicule, le régime du vilebrequin n'est alors pas une fonction de la vitesse des roues et il est possible de faire fonctionner le moteur thermique à son point de fonctionnement optimal, avec une consommation minimale par rapport à la puissance fournie, et d'utiliser une partie des machines électriques en mode générateur pour alimenter la batterie de traction et d'autres machines électriques en mode moteur afin d'assurer la motricité du véhicule. Pour pouvoir générer de l'électricité depuis le moteur thermique 2, l'une des machines électriques est couplée mécaniquement au moteur thermique. . Ce couplage peut être permanent via des arbres ou des pignons comme c'est le cas de la machine électrique secondaire avant 5 ou temporaire via les embrayages 10, 11 et la boite vitesse 9 comme c'est le cas de la machine électrique principale avant 3 dans cet exemple.

Enfin, le véhicule 100 comprend également une ou plusieurs unités de contrôle électrique, telles qu'un processeur (par exemple un microprocesseur, un microcontrôleur ou autre), destinées, entre autres, à gérer le fonctionnement de l'ensemble des machines électriques et de la batterie de traction. Une seule unité de contrôle électronique (UCE) 12, connectée à tous les organes du groupe motopropulseur est représentée sur les figures.

Cette UCE 12 pilote notamment le fonctionnement des organes précédemment cités, par exemple via un bus de multiplexage CAN en fonction des paramètres du véhicule ou via tout autre moyen de communication. Les paramètres du véhicule pris en compte par l'UCE 12 sont par exemple mesurés par des capteurs et peuvent se rapporter au déplacement du véhicule.

L'UCE 12 permet le contrôle de la transmission de l'énergie électrique de la batterie de traction via des couples moteurs vers les roues (machines électriques en mode moteur). L'UCE 12 contrôle également le couple généré depuis les machines électriques à partir du couple du moteur thermique 2 afin de recharger la batterie de traction 1 et d'alimenter les autres machines électriques.

La volonté du conducteur du véhicule est exprimée à travers au moins un organe de commande du véhicule, telles que les pédales d'accélérateur et de frein. Cette volonté se traduit par une accélération ou décélération du véhicule, interprétée par l'UCE 12 et traduite en consigne de couple mécanique cible, correspondant typiquement à des valeurs optimales de couple. Ces consignes de couple mécanique cibles sont généralement déterminées en fonction de critères de loi de gestion d'énergie et de contrôle de stabilité du véhicule bien connues de l'homme du métier et qui ne seront donc pas détaillées ici. Cette détermination peut être effectuée par un module d'optimisation 120 de l'UCE 12 configuré à cet effet et recevant les informations de l'au moins un organe de commande (Org_com).

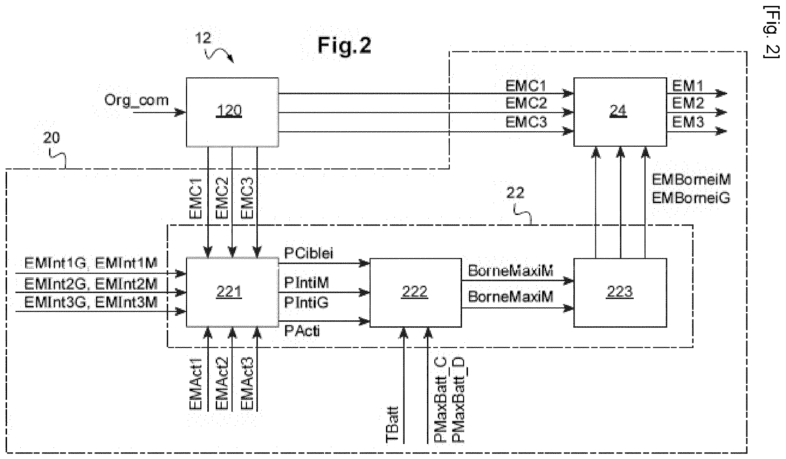

Un mode de réalisation d'un système de commande 20 des machines électriques permettant de distribuer le couple mécanique que doit fournir chaque machine électrique est décrit ci-après en référence à la figure 2.

Ce système de commande 20 peut faire partie de l'UCE 12. Il peut comprendre des moyens de calcul tels qu'un processeur, par exemple un microprocesseur, un microcontrôleur ou autre, notamment programmés pour mettre en œuvre le procédé selon l'invention. Des moyens de communication, optionnellement bidirectionnels, peuvent être prévus entre le système de commande, différents moyens de mesure (couple, température), et les unités ou modules du système de commande. Le ou les processeurs peuvent avoir des moyens de stockage qui peuvent être une mémoire vive (RAM), une mémoire morte programmable effaçable électriquement (EEPROM), une mémoire flash, une mémoire externe ou autre. Ces moyens de stockage peuvent, entre autres, stocker des données reçues, un modèle de contrôle, une ou plusieurs cartographies et un ou plusieurs programmes informatiques.

Le système de commande 20 comprend une unité de gestion 22 et une unité de distribution de couple 24. L'unité de gestion 22 est configurée, notamment programmée pour, mettre en œuvre l'étape de gestion du procédé de commande au cours de laquelle on détermine, pour chaque machine électrique, des bornes maximales de puissance électrique apte à être utilisée par ladite machine électrique. L'unité de distribution de couple 24 est quant-à-elle configurée, notamment programmée pour, mettre en œuvre l'étape de distribution du procédé de commande au cours de laquelle on distribue à chaque machine une consigne de couple.

Afin d'assurer la motricité du véhicule, la puissance électrique de la batterie de traction doit être distribuée entre les trois machines électriques du véhicule. Par ailleurs, les performances de la batterie de traction 1 en charge et décharge dépendent de son niveau de charge et de sa température principalement. La puissance maximale de charge et de décharge de la batterie de traction en fonction de la température et du SOC (State of charge-Etat de charge en anglais) sont généralement définies dans ce qui est connu comme la cartographie de puissance, typiquement gérée par l'UCE (12).

L'invention prévoit d'établir, notamment à un instant t, des bornes maximales de puissance électrique que chaque machine électrique peut utiliser en mode de charge (ou régénération) de la batterie de traction (BorneMax1G, BorneMax2G, BorneMax3G) et en mode de décharge de la batterie de traction (Bornemax1M, BorneMax2M, Borne-Max3M) en prenant en compte les limitations suivantes :

- la puissance maximale électrique disponible au niveau de la batterie en mode charge (PMaxBatt_C) ou en mode décharge (PMaxBatt_D),
- l'interprétation de la volonté du conducteur via des consignes de puissance électrique cible (PCible1, PCible2, PCible3) calculées pour chaque machine électrique en fonction de la position d'au moins un organe de commande du véhicule. Elles sont typiquement obtenues par la conversion des consignes de couple mécanique cible (EMC1, EMC2, EMC3).
- les valeurs en cours (à l'instant t) de puissance électrique fournies par les machines électriques (PAct1, PAct2, PAct3), typiquement obtenues par conversion des valeurs des couples mécaniques en cours des machines électriques (EMAct1, EMAct2, EMAct3) qui sont par exemple mesurées par des capteurs,
- les consignes de puissance maximale intrinsèques des machines électriques en mode de charge (PInt1G, PInt2G, PInt3G) ou en mode de décharge (PInt1M, PInt2M, PInt3M), correspondant à l'ensemble des limitations thermiques, électriques et mécaniques des machines électriques et de leur onduleur/démarreur. Elles proviennent typiquement de la conversion de consignes de couples mécaniques maximaux applicables à chaque machine électrique (EMInt1, EMInt2, EMInt3).

Ainsi, tel que représenté sur la figure 2, l'unité de gestion 22 comprend un premier module de conversion 221 lequel reçoit respectivement :

- les consignes de couple mécanique cibles (EMC1, EMC2, EMC3), typiquement déterminées par l'UCE 12 en fonction d'au moins un organe de commande,
- les consignes de couples mécaniques maximaux intrinsèques en mode de charge (EMInt1G, EMInt2G, EMInt3G) ou en mode de décharge (EMInt1M, EMInt2M, EMInt3M) , ces consignes peuvent être préalablement établies et enregistrées dans l'UCE 12,
- les valeurs des couples mécaniques en cours des machines électriques (EMAct1, EMAct2, EMAct3), par exemple obtenues par des capteurs.

Ce module 221 est configuré (notamment programmé) pour transformer ces couples mécaniques en puissances électriques, respectivement :

- les consignes de puissance électrique cibles (PCible1, PCible2, PCible3, aussi notées PCiblei sur la figure 2, où i est un entier de 1 à 3),
- les consignes de puissance maximale intrinsèques des machines électriques (PInt1M, PInt2M, PInt3M ou PInt1G, PInt2G, PInt3G, aussi notées PIntiM et PIntiG sur la figure 2, avec i=1, 2 ou 3), et
- les valeurs en cours de la puissance électrique fournies par les machines électriques (PAct1, PAct2, PAct3, aussi notées PActi sur la figure 2, avec i=1, 2 ou 3)).

Ces puissances électriques sont transmises à un module de répartition 222 configuré (notamment programmé) pour déterminer les bornes maximales de chaque machine électrique (notées BorneMaxiM et BorneMaxiG sur la figure 2 avec i=1, 2 ou 3), en prenant en compte les limitations précitées. Cette détermination revient à répartir la puissance de la batterie de traction entre les différentes machines électriques. Ce module de répartition 222 reçoit également en entrée la puissance électrique maximale disponible au niveau de la batterie de traction (PMaxBatt_C, PMaxBatt_D) ainsi qu'une information de température de la batterie de traction (TBatt). La puissance électrique maximale disponible au niveau de la batterie de traction peut être déterminée de manière classique par l'UCE 12, par exemple à partir d'une cartographie. La température de la batterie peut être mesurée par un capteur de température intégré à la batterie ou situé à proximité de celle-ci.

Les machines électriques peuvent travailler en tant que moteur ou en tant que générateur. La limitation de puissance, et par conséquent de courant, provoque une diminution de couple générateur (négatif) et moteur (positif) que la machine peut fournir. Cette limitation n'est pas forcément symétrique pour une machine électrique fonctionnant en mode générateur ou en mode moteur. Ceci peut être pris en compte en attribuant des ordres de priorité différents aux machines électriques selon qu'on est en mode de décharge ou de charge de la batterie de traction, tel que par exemple décrit ci-après.

(1) <u>Mode de décharge de la batterie de traction</u>

La répartition de la puissance électrique entre les machines est réalisée de la manière suivante par le module de répartition 222 en considérant que les machines fonctionnent en mode moteur.

On détermine en premier une puissance électrique disponible au niveau d'un réseau formé par l'ensemble des machines électriques et de la batterie de traction, il s'agit ici d'une puissance disponible en décharge (PDispoR_D). Elle assure la traction du véhicule et est égale à la somme de la puissance électrique en décharge de la batterie de traction plus la puissance électrique que les machines électriques en mode générateur génèrent au même moment en prélevant le couple du moteur thermique 2 à laquelle elles sont couplées. Dans la configuration de la figure 1, deux machines électriques sont susceptibles de fonctionner en mode générateur.

On répartit alors la puissance électrique entre les machines électriques dans l'ordre suivant : machine électrique arrière, machine électrique principale avant, machine électrique secondaire avant.

La puissance électrique maximale en mode de décharge pouvant être allouée à la machine électrique arrière 7 (BorneMax1M) est alors le minimum entre la consigne de puissance électrique cible de la machine arrière, la puissance électrique maximale de décharge disponible au niveau du réseau (PDispoR_D) et la puissance électrique maximale intrinsèque de la machine électrique arrière 7 et de son onduleur (PInt1M).

Dans le cas où la puissance de batterie disponible est très faible, il convient, pour chaque machine en mode générateur, de tenir compte de la puissance électrique à recevoir de cette machine pondérée du facteur d'anticipation Z de puissance disponible. En effet, si l'on attend que la machine de charge apporte de la puissance alors que celle-ci attend que l'on consomme de l'énergie pour charger, le système peut se bloquer (cas typique de batterie très froide avec puissance de charge et de décharge quasi nulle). On choisit donc d'ouvrir le côté moteur en premier de manière à dépasser le régime transitoire côté moteur (moins dommageable pour la batterie) puis, dès que la consommation d'énergie est effective, on pourra alors ouvrir la puissance côté régénération. Pour tenir compte de cette anticipation, on considère donc que la puissance fournie par chaque machine en mode générateur est le maximum entre la puissance actuellement fournie par la machine et la puissance cible qu'elle devrait fournir à terme une fois la machine en mode moteur ayant puisé la puissance nécessaire à la traction, pondérée par le facteur d'anticipation Z.

Ce facteur d'anticipation de puissance disponible est défini de manière à ne pas dégrader la batterie de traction. Pour les valeurs de température de la batterie de traction pour lesquelles cette dernière peut être dégradée lors d'un fonctionnement en régime transitoire, on choisira un facteur Z dont la valeur est proche de 1. A contrario, pour les valeurs de température de la batterie de traction qui ont peu d'impact sur le fonctionnement de cette dernière, on choisira un facteur Z dont la valeur est proche de 0, voire nulle si la température n'a pas d'impact sur le fonctionnement. Il est ainsi possible de pondérer la quantité de puissance électrique de la ou des machines fonctionnant en mode générateur qui sera utilisée en fonction de la température de la batterie. Les valeurs du facteur Z à utiliser pour chaque température ou zone de température de la batterie peuvent être enregistrées dans une cartographie. Au cours de l'étape de gestion, la valeur du facteur Z utilisée dépendra donc de la température de la batterie de traction à l'instant t considéré, cette température pouvant être reçue d'un capteur de mesure.

La détermination de la borne maximale de puissance électrique pouvant être allouée à la machine électrique la première dans l'ordre de priorité peut s'exprimer de la manière suivante :

[Math 1]

$$\text{BorneMax1M} = \max[0, \min[\text{PDispoR\_D, PCible1, PInt1M}]],$$

Avec

$$PDispoR\_D = PMaxBatt\_D + max[-PAct2, -Z \times PCible2, 0] + max[-PAct3, -Z \times PCible3, 0].$$  [Math 2]

La puissance électrique de décharge restante est ensuite allouée à la machine électrique principale avant 3, deuxième dans l'ordre de priorité. La puissance maximale allouée à la machine électrique principale avant 3 (BorneMax2M) est la puissance électrique maximale de la batterie de traction 1 en mode décharge (PMaxBatt\_D) plus ce que la machine secondaire train avant 5 génère au même moment à partir du moteur thermique 2 (max [-PAct3, Z x PCible3, 0]) moins la puissance maximale qui a été allouée à la machine électrique train arrière (BorneMax1M). Ce calcul est limité par la puissance maximale en mode moteur de l'ensemble machine électrique principale train avant 3 et son onduleur 4 (PInt2M).

Ceci peut s'écrire de la manière suivante :

$$BorneMax2M = max[0, min[(PMaxBatt\_D + max [-PAct3, Z \times PCible3, 0] - BorneMax1M), PInt2M]].$$  [Math 3]

Finalement, s'il reste encore de la puissance électrique au niveau de la batterie de traction 1, elle est allouée à la machine électrique secondaire avant 5, troisième dans l'ordre de priorité. La puissance maximale en mode moteur pour cette dernière est la puissance maximale de la batterie de traction en mode décharge moins la puissance maximale en mode moteur qui a été allouée à la machine électrique train arrière 7 moins la puissance maximale en mode moteur qui a été allouée à la machine électrique principale train avant 3. Ce calcul est limité par la puissance maximale en mode moteur de la machine électrique secondaire avant 5 et de son onduleur.

Ceci peut s'écrire de la manière suivante :

$$BorneMax3M = max [0, min[(PMaxBatt\_D - BorneMax1M - BorneMax2M), PInt3M]]$$  [Math 4]

(2) <u>Mode de charge de la batterie de traction</u>

La répartition de la puissance électrique entre les machines peut être réalisée de la manière suivante en considérant que les machines électriques fonctionnent en mode générateur.

On détermine en premier une puissance électrique disponible au niveau du réseau formé par l'ensemble des machines électriques et de la batterie de traction, il s'agit ici d'une puissance disponible en charge (PDispoR\_C). Elle assure la charge de la batterie de traction et est égale à la somme de la puissance électrique en charge de la batterie de traction plus la puissance électrique que les machines électriques en mode moteur consomment au même moment pour assurer la motricité du véhicule.

On répartit alors la puissance électrique entre les machines électriques dans l'ordre suivant : machine électrique avant secondaire, machine électrique avant principale, machine électrique arrière.

La machine électrique secondaire avant 5 est privilégiée car elle est couplée en permanence au moteur thermique 2 et, en termes de rendement mécanique, elle est la plus efficace pour être utilisée en mode générateur. La puissance maximale (BorneMax1G)allouée à la machine électrique secondaire train avant 5 est le minimum entre la consigne de puissance électrique cible de la machine 'électrique secondaire avant (- PCible1), la puissance électrique de charge maximale disponible au niveau du réseau (PDispoR\_C) et la puissance électrique maximale intrinsèque de la machine électrique secondaire avant en mode générateur et de son onduleur (PInt1G).

Ceci peut s'exprimer de la manière suivante :

[Math 5]
$$BorneMax1G = max[0, min[PDispoR\_C, - PCible1, PInt1G]],$$

Avec

[Math 6]
$$PDispoR\_C = PMaxBatt\_C + max[PAct2, 0] + max[PAct3, 0].$$

La puissance de charge électrique restante est ensuite allouée à la machine électrique principale avant 3. La puissance de charge disponible pour cette machine est la puissance de la batterie de traction 1 en mode charge (PMaxBatt\_C) plus ce que la machine électrique arrière 7 consomme (Pact2) moins la puissance qui a été allouée à la machine électrique secondaire avant 5 (BorneMax1G). Ce calcul est limité par la puissance maximale de la machine électrique principale avant 3 et de son onduleur 4 en mode générateur (PInt2G).

Ceci peut s'exprimer de la manière suivante :

$$\text{BorneMax2G} = \max[0, \min[(\text{PMaxBatt\_C} + \max[\text{Pact2}, 0] - \text{BorneMax1G}), \text{Pint2G}]] \qquad \text{[Math 7]}$$

Finalement, s'il reste encore de la puissance électrique de charge au niveau de la batterie de traction 1, elle est allouée à la machine électrique arrière 7. La puissance disponible pour cette machine est la puissance de la batterie de traction 1 en mode charge (PMaxBatt_C) moins la puissance maximale en mode générateur qui a été allouée à la machine électrique secondaire train avant 5 (BorneMax1G) et moins la puissance maximale en mode générateur qui a été allouée à la machine électrique principale train avant 3 (BorneMax2G). Ce calcul est limité par la puissance maximale en mode générateur de la machine électrique arrière 7 et de son onduleur 8 (PInt3G).

Ceci peut s'exprimer de la manière suivante :

$$\text{BorneMax3G} = \max[0, \min[(\text{PMaxBatt\_C} - \text{BorneMax1G} - \text{BorneMax2G}), \text{PInt3G}]] \qquad \text{[Math 8]}$$

Ces bornes, déterminées par le module de répartition 222, sont ensuite transférées à l'unité de distribution 24. A cet effet, elles sont converties en bornes de couples mécaniques (EMBorne1M, EMBorne2M, EMBorne2M ; EMBorne1G, EMBorne2G, EMBorne2G, aussi notées EMBorneiM et EMBorneiG sur la figure 2 avec 1 = 1, 2 ou 3) dans un module de transformation 223 configuré (programmé) à cet effet, avant d'être transmises à l'unité de distribution 24. Le module de transformation 223 peut avantageusement être configuré pour prendre en compte le rendement de conversion électromécanique de l'ensemble onduleur et machine électrique pour chaque machine en mode générateur et moteur ainsi que les pertes à vide de chaque machine électrique afin d'estimer le couple mécanique maximal de chaque machine électrique à régime nul.

Ces bornes des couples mécaniques (EMBorne1M, EMBorne2M, EMBorne2M ; EMBorne1G, EMBorne2G, EMBorne2G) correspondent à des minima et maxima à appliquer à chaque machine électrique. En effet, les bornes maximales de puissance électrique déterminées en mode charge de la batterie de traction sont converties en bornes de couple mécanique minimales, alors que les bornes maximales de puissance électrique déterminées en mode décharge de la batterie de traction sont converties en bornes de couple mécanique maximales.

A réception des bornes des couples mécaniques (EMBorne1M, EMBorne2M, EMBorne2M ; EMBorne1G, EMBorne2G, EMBorne2G), l'unité de distribution 24 est configurée pour distribuer à chaque machine électrique une consigne de couple (EM1, EM2, EM3) établie en limitant les consignes de couple mécanique cibles (EMCible1, EMCible2, EMCible3) avec les minima et maxima obtenus par conversion en couples mécaniques des bornes maximales de puissance électrique déterminées au cours de l'étape de gestion par l'unité de gestion 22. Notamment, l'unité de distribution 24 peut être configurée (programmée) pour établir les consignes de couple (EM1, EM2, EM3) de sorte que leur somme n'excède jamais la somme des bornes des couples mécaniques en mode de charge et en mode de décharge. Ceci revient à affecter à chaque machine électrique les consignes de couple mécanique cibles déterminées par le module d'optimisation 120 avec un ordre de priorité, typiquement le même que celui utilisé pour déterminer les bornes maximales de puissance électrique pouvant être allouées à chaque machine (BorneMaxiM, BorneMaxiG). Par exemple, en mode décharge de la batterie de traction, on affecte en priorité la consigne de couple mécanique cible (EMC1) à la machine électrique arrière, puis on affecte la consigne de couple mécanique cible (EMC2) à la machine principale avant, et enfin on affecte la consigne de couple mécanique cible (EMC3) à la dernière machine. Dans le cas où la proposition optimale (EMC1, EMC2, EMC3) dépasse les limitations (EMBorneiM, EMBorneiG), c'est la dernière machine qui verra son couple (EM3) réduit en premier, potentiellement jusqu'à son annulation si le dépassement est très important, par exemple supérieur à un seuil prédéfini, puis la machine principale avant si le dépassement est encore plus important et en dernier recours la machine arrière (dans le cas où les consignes de couple mécanique cibles sont vraiment très loin de respecter les limitations et où le seul couple cible de la machine arrière ne respecte déjà pas la limitation).

Ainsi, on applique les limitations calculées (EMBorneiM, EMBorneiG) aux consignes de couple mécanique cibles (saturation des consignes par les MIN/MAX calculés) pour établir les consignes finales (EM1, EM2, EM3).

De cette manière, le module d'optimisation 120 conserve la possibilité de réordonner la priorité entre les machines. Par exemple, si le module d'optimisation détermine une consigne de couple mécanique nulle pour la machine électrique arrière, alors l'application des formules de limitation donnera une borne maximale de puissance électrique également nulle pour cette machine, ce qui est pris en compte pour le calcul des bornes maximales de puissance des autres machines.

L'invention permet ainsi à la fois de :

- protéger en permanence la batterie de traction en respectant sa limitation de puissance électrique de charge et de décharge en évitant des sous-tensions et des surtensions et en assurant sa durabilité et son étant de santé. Ceci peut permettre de garder 80% de la capacité maximale de la batterie pendant 8 ans.

- allouer en permanence les capacités maximales possibles aux trois machines électriques afin d'obtenir la performance maximale possible du GMP et ainsi ne pas être plus protecteur que nécessaire en assurant une prestation optimale.

Exemple

L'exemple numérique ci-après illustre la répartition de la puissance électrique maximale disponible entre les machines.

Selon cet exemple, à l'instant t, le véhicule présente l'état suivant :

Batterie de traction :

$$PMaxBatt\_D = 100kW$$

$$PMaxBatt\_C = 90kW$$

Consignes de puissance maximale intrinsèques des machines électriques et de leur onduleur :

- machine électrique arrière, mode moteur ou générateur: $PInt1M = PInt3G = 100$ kW
- machine électrique principale avant, mode moteur ou générateur: $PInt2M = PInt2G = 63$ kW
- machine électrique secondaire avant, mode moteur ou générateur : $PInt3M = PInt1G = 30kW$

Consignes de puissance électrique cibles :

- machine électrique arrière : $PCible1 = 500$ kW
- machine électrique principale avant : $PCible2 = 50$ kW
- machine électrique secondaire avant : $PCible3 = -20kW$,

Valeurs en cours de puissance électrique fournie par les machines électriques :

- machine électrique arrière : $PAct1 = 45$ kW
- machine électrique avant principale : $PAct2 = 20kW$.
- machine électrique avant secondaire : $PAct3 = -15kW$.

Le facteur d'anticipation Z pour des conditions grand froid n'est pas actif ici ($Z = 0$) car la température batterie est suffisamment élevée pour que celle-ci puisse délivrer une puissance non nulle. On considère que la machine électrique arrière et la machine principale avant travaillent en mode moteur et que la machine secondaire avant travaille en mode générateur. On a alors :

(1) Mode de décharge de la batterie de traction

Etant donné que le facteur d'anticipation n'est pas actif dans cet exemple, la consigne de puissance électrique cible de la machine électrique avant principale et la consigne de puissance électrique cible de la machine électrique avant secondaire ne sont pas prises en compte pour le calcul.

La puissance électrique de décharge au niveau du réseau est alors : $PDispoR\_D = 100\,kW + -(-15\,kW) = 115\,kW$.

Cette puissance est attribuée aux machines électriques dans l'ordre de priorité suivant.

La puissance électrique maximale allouée à la machine électrique arrière 7 est : $BorneMax1M = Maximum\,(0, Minimum\,(115kW, 500kW, 100\,kW)) = 100kW$

La puissance électrique de décharge restante est ensuite allouée à la machine électrique avant principale selon :

$$BorneMax2M = Maximum\,(0, Minimum\,((100kW + 15kW - 100\,kW), 63\,kW)) = 15kW.$$

Le reste de la puissance électrique restante au niveau de la batterie de traction est allouée à la machine électrique avant secondaire selon :

BorneMax3M = Maximum (0, Minimum ((100kW- 100 kW - 15kW), 30 kW)) = 0kW.

La somme des puissances maximales allouées à l'ensemble des machines électriques, 100 kW + 15 kW + 0 kW = 115kW moins ce qui est généré à l'instant t par la machine électrique avant secondaire (15kW) est ainsi égal à la puissance électrique maximale de décharge de la batterie de traction (100kW). Ainsi, en respectant les limitations imposées par la présente invention, la batterie de traction est protégée contre des sous-tensions et sa durabilité est assurée.

(2) Mode de charge de la batterie de traction

La puissance électrique de charge au niveau du réseau est : PDispoR_C = 90 kW + 45 kW + 20kW = 155 kW.
Cette puissance électrique de charge (PDispoR_C) est ensuite repartie entre les trois machines électriques dans l'ordre suivant.
La puissance électrique maximale allouée à la machine électrique avant secondaire est :

$$BorneMax1G = Maximum\ (0,\ Minimum\ (155\ kW,\ 20kW,\ 30\ kW)) = 20\ kW.$$

La puissance de charge électrique restante est ensuite allouée à la machine électrique principale avant selon :
BorneMax2G = Maximum (0, Minimum (90kW + 45kW - 20kW, 63 kW)) = 63 kW.
Le reste de la puissance électrique de charge au niveau de la batterie de traction est allouée à la machine électrique arrière selon : BorneMax3G = Maximum (0, Minimum (90kW - 20kW - 63kW, 100 kW)) = 7 kW.
La somme des puissances maximales alloués à l'ensemble des machines électriques en mode générateur, 20 kW + 63 kW + 7 kW = 155kW moins ce qui est généré à l'instant par machine électrique secondaire avant (65kW) est égal à la puissance électrique maximale de charge de la batterie de traction 90kW. Ainsi, en respectant les limitations imposées par la présente invention, la batterie de traction est protégée contre des surtensions et sa durabilité est assurée.

**Revendications**

**1.** Procédé de commande des machines électriques d'un véhicule hybride à quatre roues motrices du type comprenant un moteur thermique (2) et au moins trois machines électriques (3, 5, 7) alimentées par une batterie de traction, comprenant :

- une étape de gestion de consignes de puissance électrique destinées aux dites machines électriques au cours de laquelle on détermine, pour chaque machine électrique, des bornes maximales de puissance électrique apte à être utilisée par ladite machine électrique,
- une étape de distribution de couple au cours de laquelle on distribue à chaque machine une consigne de couple, dans lequel :

- au cours de l'étape de gestion, on détermine lesdites bornes maximales de chaque machine électrique en prenant en compte les limitations suivantes :

(i) la puissance électrique maximale disponible au niveau de la batterie de traction,
(ii) une consigne de puissance électrique cible déterminée en fonction de la position d'au moins un organe de commande du véhicule,
(iii) une consigne de puissance maximale intrinsèque de la machine électrique,
(iv) une valeur en cours de la puissance électrique fournie par la machine électrique,

- au cours de l'étape de distribution, on distribue à chaque machine électrique une consigne de couple établie en limitant un couple de consigne cible avec des minima et maxima obtenus par conversion en couples mécaniques des bornes maximales de puissance électrique déterminées au cours de l'étape de gestion,

**caractérisé en ce que**

- au cours de l'étape de gestion, on détermine lesdites bornes maximales en prenant également en compte comme limitation une puissance électrique disponible au niveau de la batterie de traction provenant d'une puissance électrique à venir fournie par une machine électrique fonctionnant en mode générateur pondérée par un facteur d'anticipation de puissance disponible (Z) dépendant de la température de la batterie de traction dont la valeur est comprise dans un intervalle allant de 0 à 1.

2. Procédé de commande selon la revendication 1, dans lequel au cours de l'étape de gestion :

- on détermine d'abord une puissance électrique disponible (PDispoR_D, PDispoR_C) au niveau d'un réseau formé par l'ensemble des machines électriques et de la batterie de traction,
- puis on détermine les bornes maximales de chaque machine électrique (BorneMax1M, BorneMax2M, BorneMax3M ; BorneMax1G , BorneMax2G , BorneMax3G) selon un ordre de priorité prédéterminé des machines électriques :

la borne maximale de la première machine (BorneMax1M, BorneMax1G) dans l'ordre de priorité étant égale au minimum entre (i) la puissance électrique disponible au niveau du réseau (PDispoR_D, PDispoR_C), (ii) la consigne de puissance maximale intrinsèque de la première machine électrique (PInt1M, PInt1G), (iii) la consigne de puissance électrique cible de la première machine (PCible1),
la borne maximale de la deuxième machine (BorneMax2M, BorneMax2G) dans l'ordre de priorité étant égale au minimum entre (i) la somme de la puissance électrique maximale disponible au niveau de la batterie de traction (PMaxBatt_D, PMaxBatt_C) et de la valeur en cours de la puissance électrique fournie par la troisième machine électrique (PAct3),
moins la valeur de borne maximale de puissance électrique déterminée pour la première machine (Borne-Max1M, BorneMax1G) et (ii) la consigne de puissance maximale intrinsèque de la deuxième machine électrique (PInt2M, PInt2G),
la borne maximale de la troisième machine (BorneMax3M, BorneMax3G) dans l'ordre de priorité étant égale au minimum entre (i) la puissance électrique maximale disponible au niveau de la batterie de traction (PMaxBatt_D, PMaxBatt_C) moins les valeurs de borne maximale de puissance électrique déterminée pour les première et deuxième machines (BorneMax1M, BorneMax1G ; BorneMax2M, BorneMax2G), et (ii) la consigne de puissance maximale intrinsèque de la troisième machine électrique (PInt3M, PInt3G).

3. Procédé de commande selon la revendication 2, dans lequel on détermine la puissance électrique disponible au niveau du réseau comme étant :

- en mode de décharge de la batterie de traction, la somme de la puissance électrique maximale disponible au niveau de la batterie de traction (PMaxBatt_D) et des puissances électriques maximales utilisées par les deuxième et troisième machines électriques fonctionnant en mode générateur,
- en mode de charge de la batterie de traction, la somme de la puissance électrique maximale disponible au niveau de la batterie de traction (PMaxBatt_C) et des puissances électriques maximales utilisées par les deuxième et troisième machines électriques fonctionnant en mode moteur.

4. Procédé de commande selon les revendications 2 et 3, dans lequel, en mode de décharge de la batterie de traction, chaque puissance électrique maximale fournie par la deuxième et la troisième machine électrique est égale, pour chacune de ces machines, au maximum entre la valeur en cours de la puissance électrique fournie par la machine électrique considérée et la puissance électrique à venir fournie par la machine électrique considérée pondérée par le facteur d'anticipation de puissance disponible.

5. Procédé de commande selon l'une quelconque des revendications 2 à 4, dans lequel le véhicule hybride comprend une machine électrique arrière (7), reliée à un train arrière du véhicule, une machine électrique avant principale (3) et une machine électrique avant secondaire (5) reliées à un train avant, la machine électrique principale avant étant apte à être couplée mécaniquement temporairement indirectement au moteur thermique, la machine électrique secondaire avant étant apte à être couplée mécaniquement directement au moteur thermique au moins temporairement, et dans lequel l'ordre de priorité décroissant des machines électriques est le suivant:

- en mode de décharge de la batterie de traction : machine électrique arrière, machine électrique principale avant, machine électrique secondaire avant,
- en mode de charge de la batterie de traction : machine électrique secondaire avant, machine électrique principale avant, machine électrique arrière.

6. Système de commande (20) des machines électriques d'un véhicule hybride à quatre roues motrices du type comprenant un moteur thermique (2) et au moins trois machines électriques (3, 5, 7) alimentées par une batterie de traction (1), configuré pour mettre en œuvre le procédé de commande selon l'une quelconque des revendications précédentes, le système de commande comprenant :

- une unité de gestion (22) configurée pour mettre en œuvre l'étape de gestion du procédé de commande,
- une unité de distribution (24) configurée pour mettre en œuvre l'étape de distribution du procédé de commande.

**7.** Véhicule hybride à quatre roues motrices du type comprenant un moteur thermique et au moins trois machines électriques alimentées par une batterie de traction, comprenant un système de commande selon la revendication précédente.

**Patentansprüche**

**1.** Verfahren zur Steuerung der elektrischen Maschinen eines Hybridfahrzeugs mit vier Antriebsrädern des Typs, der einen Verbrennungsmotor (2) und mindestens drei von einer Traktionsbatterie versorgte elektrische Maschinen (3, 5, 7) umfasst, umfassend:

- einen Schritt des Verwaltens von Sollwerten elektrischer Leistung, die für die elektrischen Maschinen bestimmt sind, während dessen für jede elektrische Maschine Maximalgrenzen elektrischer Leistung bestimmt werden, geeignet ist, von der elektrischen Maschine verwendet zu werden,
- einen Schritt des Verteilens von Drehmoment, während dessen an jede Maschine ein Drehmomentsollwert verteilt wird, wobei:
- während des Schritts des Verwaltens die Maximalgrenzen jeder elektrischen Maschine unter Berücksichtigung der folgenden Einschränkungen bestimmt werden:

i) die an der Traktionsbatterie verfügbare maximale elektrische Leistung,
ii) ein Zielsollwert elektrischer Leistung, der in Abhängigkeit von der Position mindestens eines Steuerelements des Fahrzeugs bestimmt wird,
iii) ein Sollwert maximaler Eigenleistung der elektrischen Maschine,
iv) ein aktueller Wert der von der elektrischen Maschine abgegebenen elektrischen Leistung,

- während des Schritts des Verteilens an jede elektrische Maschine ein Drehmomentsollwert verteilt wird, der ermittelt wird, indem ein Ziel-Solldrehmoment mit Minima und Maxima ermittelt wird, die durch Umwandeln der während des Schritts des Verwaltens bestimmten Maximalgrenzen elektrischer Leistung in mechanische Drehmomente erhalten werden, **dadurch gekennzeichnet, dass**
- während des Schritts des Verwaltens die Maximalgrenzen bestimmt werden, indem als Einschränkung auch eine an der Traktionsbatterie verfügbare elektrische Leistung berücksichtigt wird, die von einer künftigen elektrischen Leistung herrührt, die von einer im Generatorbetrieb arbeitenden elektrischen Maschine abgegeben wird, gewichtet durch einen von der Temperatur der Traktionsbatterie abhängenden Faktor zur Antizipierung verfügbarer Leistung (Z), dessen Wert in einem Intervall von 0 bis 1 liegt.

**2.** Verfahren zur Steuerung nach Anspruch 1, wobei während des Schritts des Verwaltens:

- zunächst eine verfügbare elektrische Leistung (PDispoR_D, PDispoR_C) an einem Netz bestimmt wird, das durch die Gesamtheit der elektrischen Maschinen und der Traktionsbatterie gebildet wird,
- dann die Maximalgrenzen jeder elektrischen Maschine (BorneMax1M, BorneMax2M, BorneMax3M; BorneMax1G, BorneMax2G, BorneMax3G) gemäß einer vorbestimmten Rangfolge der elektrischen Maschinen bestimmt werden:

wobei die Maximalgrenze der ersten Maschine (BorneMax1M, BorneMax1G) in der Rangfolge gleich dem Minimum zwischen (i) der an dem Netz verfügbaren elektrischen Leistung (PDispoR_D, PDispoR_C), (ii) dem Sollwert maximaler Eigenleistung der ersten elektrischen Maschine (PInt1M, PInt1G), (iii) dem Zielsollwert elektrischer Leistung der ersten Maschine (PCible1) ist,
wobei die Maximalgrenze der zweiten Maschine (BorneMax2M, BorneMax2G) in der Rangfolge gleich dem Minimum zwischen (i) der Summe aus der verfügbaren maximalen elektrischen Leistung an der Traktionsbatterie (PMaxBatt_D, PMaxBatt_C) und dem aktuellen Wert der von der dritten elektrischen Maschine abgegebenen elektrischen Leistung (PAct3) abzüglich des für die erste Maschine bestimmten Werts der Maximalgrenze elektrischer Leistung (BorneMax1M, BorneMax1G), und (ii) dem Sollwert maximaler Eigenleistung der zweiten elektrischen Maschine (PInt2M, PInt2G) ist,

wobei die Maximalgrenze der dritten Maschine (BorneMax3M, BorneMax3G) in der Rangfolge gleich dem Minimum zwischen (i) der an der Traktionsbatterie verfügbaren maximalen elektrischen Leistung (PMaxBatt_D, PMaxBatt_C) abzüglich der Werte der für die erste und zweite Maschine bestimmten Maximalgrenze elektrischer Leistung (BorneMax1M, BorneMax1G; BorneMax2M, BorneMax2G), und (ii) dem Sollwert maximaler Eigenleistung der dritten elektrischen Maschine (PInt3M, PInt3G) ist.

3. Verfahren zur Steuerung nach Anspruch 2, wobei die an dem Netz verfügbare elektrische Leistung bestimmt wird als:

- im Entlademodus der Traktionsbatterie, die Summe aus der an der Traktionsbatterie verfügbaren maximalen elektrischen Leistung (PMaxBatt_D) und den von den im Generatorbetrieb arbeitenden zweiten und dritten elektrischen Maschinen verwendeten maximalen elektrischen Leistungen,
- im Lademodus der Traktionsbatterie, die Summe aus der an der Antriebsbatterie verfügbaren maximalen elektrischen Leistung (PMaxBatt_C) und den von den im Motorbetrieb arbeitenden zweiten und dritten elektrischen Maschinen verwendeten maximalen elektrischen Leistungen.

4. Verfahren zur Steuerung nach den Ansprüchen 2 und 3, wobei im Entlademodus der Traktionsbatterie jede von der zweiten und dritten elektrischen Maschine abgegebene maximale elektrische Leistung bei jeder dieser Maschinen gleich dem Maximum zwischen dem aktuellen Wert der von der betrachteten elektrischen Maschine abgegebenen elektrischen Leistung und der künftigen elektrischen Leistung, die von der betrachteten elektrischen Maschine abgegeben wird, gewichtet durch den Faktor zur Antizipierung der verfügbaren Leistung, ist.

5. Verfahren zur Steuerung nach einem der Ansprüche 2 bis 4, wobei das Hybridfahrzeug eine hintere elektrische Maschine (7), die mit einer Hinterachse des Fahrzeugs verbunden ist, eine vordere elektrische Hauptmaschine (3) und eine vordere elektrische Nebenmaschine (5), die mit einer Vorderachse verbunden sind, umfasst, wobei die vordere elektrische Hauptmaschine geeignet ist, vorübergehend indirekt mechanisch mit dem Verbrennungsmotor gekoppelt zu werden, wobei die vordere elektrische Nebenmaschine geeignet ist, mindestens vorübergehend direkt mechanisch mit dem Verbrennungsmotor gekoppelt zu werden, und wobei die Rangfolge der elektrischen Maschinen die folgende ist:

- im Entlademodus der Traktionsbatterie: hintere elektrische Maschine, vordere elektrische Hauptmaschine, vordere elektrische Nebenmaschine,
- im Lademodus der Traktionsbatterie: vordere elektrische Nebenmaschine, vordere elektrische Hauptmaschine, hintere elektrische Maschine.

6. System (20) zur Steuerung der elektrischen Maschinen eines Hybridfahrzeugs mit vier Antriebrädern des Typs, der einen Verbrennungsmotor (2) und mindestens drei von einer Traktionsbatterie (1) versorgte elektrische Maschinen (3, 5, 7) umfasst, das dazu ausgestaltet ist, das Verfahren zur Steuerung nach einem der vorhergehenden Ansprüche durchzuführen, wobei das System zur Steuerung umfasst:

- eine Verwaltungseinheit (22), die dazu ausgestaltet ist, den Schritt des Verwaltens des Verfahrens zur Steuerung durchzuführen,
- eine Verteilungseinheit (24), die dazu ausgestaltet ist, den Schritt des Verteilens des Verfahrens zur Steuerung durchzuführen.

7. Hybridfahrzeug mit vier Antriebsrädern des Typs, der einen Verbrennungsmotor und mindestens drei von einer Traktionsbatterie versorgte elektrische Maschinen umfasst, umfassend ein System zur Steuerung nach dem vorhergehenden Anspruch.

## Claims

1. Method for controlling the electric machines of a four-wheel-drive hybrid vehicle of the type comprising a combustion engine (2) and at least three electric machines (3, 5, 7) powered by a traction battery, comprising:

- a step of managing electric-power setpoints intended for said electric machines, during which step maximum limits of electric power able to be used by said electric machine are determined for each electric machine,
- a step of distributing torque, during which step a torque setpoint is distributed to each machine, in which method:

- during the managing step, said maximum limits of each electric machine are determined taking into account the following limitations:

(i) the maximum electric power available in the traction battery,
(ii) a target electric-power setpoint determined depending on the position of at least one control member of the vehicle,
(iii) an intrinsic maximum power setpoint of the electric machine,
(iv) an actual value of the electric power being delivered by the electric machine,

- during the distributing step a torque setpoint established by limiting a target setpoint torque with minima and maxima obtained by converting the maximum limits of electric power determined during the managing step into mechanical torques is distributed to each electric machine, **characterized in that**
- during the managing step, said maximum limits are determined while also taking into account, as limitation, an electric power available in the traction battery originating from a future electric power delivered by an electric machine operating in generator mode, weighted by an available-power anticipation factor (Z) dependent on the temperature of the traction battery, the value of which lies within an interval extending from 0 to 1.

2. Control method according to Claim 1, wherein, during the managing step:

- firstly, an electric power (PDispoR_D, PDispoR_C) available in a network formed by all of the electric machines and the traction battery is determined,
- then the maximum limits of each electric machine (BorneMax1M, BorneMax2M, BorneMax3M; BorneMax1G, BorneMax2G, BorneMax3G) are determined in a predetermined order of priority of the electric machines:

the maximum limit of the first machine (BorneMax1M, BorneMax1G) in the order of priority being equal to the minimum between (i) the electric power available in the network (PDispoR_D, PDispoR_C), (ii) the intrinsic maximum power setpoint of the first electric machine (PInt1M, PInt1G), (iii) the target electric-power setpoint of the first machine (PCible1),
the maximum limit of the second machine (BorneMax2M, BorneMax2G) in the order of priority being equal to the minimum between (i) the sum of the maximum electric power available in the traction battery (PMaxBatt_D, PMaxBatt_C) and of the actual value of the electric power delivered by the third electric machine (PAct3), minus the value of maximum electric-power limit determined for the first machine (BorneMax1M, BorneMax1G) and (ii) the intrinsic maximum power setpoint of the second electric machine (PInt2M, PInt2G),
the maximum limit of the third machine (BorneMax3M, BorneMax3G) in the order of priority being equal to the minimum between (i) the maximum electric power available in the traction battery (PMaxBatt_D, PMaxBatt_C) minus the values of the maximum electric-power limit determined for the first and second machines (BorneMax1M, BorneMax1G; BorneMax2M, BorneMax2G), and (ii) the intrinsic maximum power setpoint of the third electric machine (PInt3M, PInt3G).

3. Control method according to Claim 2, wherein the electric power available in the network is determined as being:

- in a discharging mode of the traction battery, the sum of the maximum electric power available in the traction battery (PMaxBatt_D) and of the maximum electric powers used by the second and third electric machines operating in generator mode,
- in a charging mode of the traction battery, the sum of the maximum electric power available in the traction battery (PMaxBatt_C) and of the maximum electric powers used by the second and third electric machines operating in motor mode.

4. Control method according to Claims 2 and 3, wherein, in the discharging mode of the traction battery, each maximum electric power delivered by the second and the third electric machine is equal, for each of these machines, to the maximum between the actual value of the electric power delivered by the electric machine in question and the future electric power delivered by the electric machine in questiona, weighted by the available-power anticipation factor.

5. Control method according to any of Claims 2 to 4, wherein the hybrid vehicle comprises a rear electric machine (7), connected to a rear axle of the vehicle, a main front electric machine (3) and a secondary front electric machine (5) connected to a front axle, the main front electric machine being able to be mechanically coupled indirectly to the combustion engine temporarily, the secondary front electric machine being able to be mechanically coupled directly to the combustion engine at least temporarily, and wherein the order of decreasing priority of the electric machines is as follows:

- in the discharging mode of the traction battery: rear electric machine, main front electric machine, secondary front electric machine,
- in the charging mode of the traction battery: secondary front electric machine, main front electric machine, rear electric machine.

6. System (20) for controlling the electric machines of a four-wheel-drive hybrid vehicle of the type comprising a combustion engine (2) and at least three electric machines (3, 5, 7) powered by a traction battery (1), said system being configured to implement the control method according to any of the preceding claims, the control system comprising:

- a managing unit (22) configured to implement the managing step of the control method,
- a distributing unit (24) configured to implement the distributing step of the control method.

7. Four-wheel-drive hybrid vehicle of the type comprising a combustion engine and at least three electric machines powered by a traction battery, comprising a control system according to the preceding claim.

[Fig. 1]

Fig.1

EP 4 422 899 B1

[Fig. 2]

Fig.2